# EUROPÄISCHE PATENTSCHRIFT

(11) **EP 2 072 173 B1**
(45) Veröffentlichungstag und Bekanntmachung des Hinweises auf die Patenterteilung: **05.06.2013**
(21) Anmeldenummer: 08021848.0
(22) Anmeldetag: 16.12.2008
(51) Int. Cl.: B23K 20/12, F16L 41/00, B23K 101/14

(54) **Verfahren zum Verbinden von Rohrboden und Rohren**
Method for joining pipe bases and pipes
Procédé destiné au raccordement de sols de tuyaux et de tuyaux

(30) Priorität: 21.12.2007 DE 102007063075
(43) Veröffentlichungstag der Anmeldung: 24.06.2009
(73) Patentinhaber: Linde AG, 80331 München (DE); Helmholtz-Zentrum Geesthacht Zentrum für Material- und Küstenforschung GmbH, 21502 Geesthacht (DE)
(72) Erfinder: Roos, Arne, 21483 Juliusburg (DE); Dos Santos, Jorge, 21395 Tespe (Avendorf) (DE); Wimmer, Georg, 84577 Tüssling (DE)

(56) Entgegenhaltungen:
- WO-A-99/52669
- CH-A- 318 030
- DD-A1- 205 357
- JP-A- 2007 144 479

## Beschreibung

Die Erfindung betrifft ein Verfahren zum Verbinden von Rohrboden und Rohren in einem Rohrbündel-Wärmeübertrager mit Hilfe eines rotierenden Reibwerkzeugs.

Wärmeübertrager sind Vorrichtungen, bei denen die Wärme eines Mediums an ein anderes abgegeben wird, indem beispielsweise ein erstes Medium durch eine Anzahl von Rohren strömt, die in dem zweiten Medium liegen und daher von diesem ebenfalls umströmt werden. Um dies zu ermöglichen, strömt das erste Medium üblicherweise durch eine Vielzahl von Rohren, die in einem Kessel oder Zylinder mit Zu- und Ablauf für das zweite Medium eingeschlossen sind. Wenn das erste Medium beispielsweise Kühlwasser ist, das sich beim Kühlen einer Anlage stark erwärmt hat, kann das zweite Medium beispielsweise Luft oder Öl sein, das an anderer Stelle zum Heizen verwendet wird. Die Rohre, durch die das erste Medium geleitet wird, sind im Allgemeinen in Rohrböden in geringem Abstand zueinander gehalten, während die Rohrböden selbst vom Mantel oder Zylinder des Wärmetauschers getragen werden. Im Allgemeinen sind die Rohre durch Walzen und Umbördeln in den Rohrböden befestigt, was zu Beginn des Betriebes für die dann herrschenden Betriebsbedingungen in der Regel ausreicht. Im Zuge des weiteren Betriebes des Wärmetauschers und den dabei entstehenden Temperatur- sowie Schwingungsbelastungen lösen sich diese Verbindungen partiell auf und genügen dann nicht mehr den Dichtheitsanforderungen. Ein Austausch oder eine teure Reparatur mit entsprechenden Ausfallzeiten der Anlage sind dann die Folge.

Man hat daher auch bereits Rohre mittels YAG-Lasers in die Rohrböden eingeschweißt, was eine aufwendige Prozesskontrolle und Prozessführung erfordert. Dennoch ist es dabei zu einem Ausgasen in der Schweißnaht gekommen, was eine Porenbildung zur Folge hatte. Ein weiterer Nachteil dieses Laserschweißverfahrens besteht darin, dass aufgrund der geringen Duktilität im lasergeschweißten Nahtbereich eine recht große Einschweißtiefe von etwa 0,8 x Rohrdicke erforderlich ist. Diese Einschweißtiefe kann mit dem YAG-Laser jedoch nicht in allen Konfigurationen erreicht werden. Da aufgrund der erforderlichen Schweißgeschwindigkeiten und der engen Radien der zugrundeliegende Geometrien nicht mit einem Zusatzwerkstoff gearbeitet werden kann, wird in absehbarer Zeit ein befriedigendes Ergebnis mit dem YAG-Laser-Schweißverfahren nicht zu erzielen sein.

Ein weiteres bekanntes Schweißverfahren ist das MIG-Verfahren, mit dem sich ein optisch gutes Aussehen der geschweißten Nähte erzielen lässt. Aufgrund der komplexen Wärmeführung entstehen jedoch immer wieder bis knapp unter die Oberfläche der MIGnaht reichende Spannungsrisse, die die Integrität der Konstruktion beeinträchtigen. Generell sind die auf dem Aluminiumwerkstück vorhandenen hochschmelzenden Oxidhäute für die Schmelzschweißverfahren ein Hindernis, da diese erst aufgeschmolzen werden müssen, bis eine befriedigende Verbindung erzielt werden kann. Der Unterschied in der Schmelztemperatur von Aluminium mit etwa 660°C und den Oxiden mit ca. 2050°C macht ein Aufschmelzen der Oxide, die als Diffusionsbarriere ein Verschweißen sonst verhindern können, nötig. Die dafür notwendigen hohen Energien haben jedoch einen negativen Einfluss auf die niedriger schmelzenden Legierungsbestandteile der zu verschweißenden Werkstoffe. Als Folge kommt es im Nahtbereich zu Entfestigungen oder Aufhärtungen.

Aus der DD 205 357 ist ein Verfahren zur Herstellung einer Reibschweißverbindung bekannt, bei dem beispielsweise Rohrböden für Wärmetauscher hergestellt werden. Zu dem Zweck werden die zu verbindenden Teile fest arretiert und im Bereich der zu schweißenden Naht mit Hilfe eines rotierenden und die Schweißwärme wärme erzeugenden Reibringes erwärmt und verschweißt. Der dabei verwendeten Reibring dient als Zusatzwerkstoff und kann entsprechend der durchzuführenden Schweißaufgabe im Querschnitt unterschiedlich ausgebildet sein. Es kommt daher zum Verbrauch des Reibrings als Teil des Reibwerkzeugs.

Aus der US 2007/0138237 ist ein Verfahren zum Verschweißen der Rohrenden von Wärmetauscherrohren in Rohrböden bekannt, bei dem verschieden geformte Reibwerkzeuge auf die Rohrenden einwirken und diese durch Erwärmung verschweißen. In einer Ausführungsform hat dazu das zylindrische Reibwerkzeug den gleichen Durchmesser wie das zu verschweißende Rohr. In einer anderen Ausführungsform ist der Durchmesser des Reibwerkzeugs kleiner als der Außendurchmesser des zu verschweißenden Rohrs, jedoch größer als dessen Innendurchmesser. In wiederum anderen Ausführungsformen hat die Stirnseite des zylindrischen Reibwerkzeugs Profilierungen, mit denen das Rohr kontaktiert wird.

In der CH 318030 wird eine Schweißverbindung eines Rohres mit einem zur Aufnahme des Rohres durchbohrten Rohrboden offenbart. Die Erfindung ist dadurch gekennzeichnet, dass die ringförmige Schweißnaht in einer zur Bohrung konzentrischen Mulde des Rohrbodens - deren Durchmesser größer als der Bohrungsdurchmesser ist und deren Sohle mit der Stirnfläche des Rohres abschließt - angeordnet ist und die Stirnfläche des Rohres mit der außerhalb der Bohrung liegenden Fläche der Mulde verbindet.

**Aufgabe** der Erfindung ist es, ein gegenüber dem Stand der Technik verbessertes Verfahren zum Verbinden von Rohrböden und Rohren in einem Rohrbündel-Wärmeübertrager und ein dazu geeignetes Reibwerkzeug zu schaffen.

Zur **Lösung** dieser Aufgabe dient das Verfahren der eingangs genannten Art, welches dadurch gekennzeichnet ist, dass das Reibwerkzeug in das offene Ende eines vom Rohrboden umgebenen Rohres rotierend in dessen axialer Richtung hinein bewegt und gegen die Stirnfläche des Rohres in der Weise gedrückt wird, daß das Rohrende und der das Rohrende umgebende Bereich des Rohrbodens plastifiziert werden und miteinander eine Schweißverbindung eingehen.

Das Reibwerkzeug zur Durchführung des Verfahrens zeichnet sich aus durch einen Schaft, der an seinem freien, nicht zum Einspannen vorgesehenen Ende einen zylindrischen Reibzapfen aufweist, der sich beim Reibschweißen nicht verbraucht, und durch einen an den Reibzapfeh anschließenden Bund mit größerem Außendurchmesser als der Reibzapfen und mit einer Schulter, die den Übergang vom Bund zum Reibzapfen bildet.

Gemäß Erfindung wird zunächst ein Reibwerkzeug von für den jeweiligen Anwendungsfall spezieller Form erzeugt und mit einer Profilierung versehen, die an die jeweilige Materialpaarung angepasst ist. Das Reibwerkzeug wird dann mit seinem zylindrischen Reibzapfen in ein freies Rohrende bewegt und in schnelle Drehung versetzt, wie sie für das Reibrührschweißen üblich und dem Fachmann daher bekannt ist. Durch weitere Hineinbewegung des Reibzapfens in das freie, nicht dargestellte Rohrende gelangt schließlich eine mit Profilierungen versehene Schulter in Kontakt mit dem freien Rohrende und erzeugt dabei eine derart hohe Reibungswärme, dass das freie Rohrende und der umgebende Bereich des Rohrbodens plastifiziert werden und miteinander eine Kreisverbindung eingehen.

Die Erfindung wird nachfolgend anhand einer Zeichnung näher erläutert; es zeigen:
- **Figur 1**: einen Ausschnitt von einem Rohrboden mit Rohr und in das Rohrende eingesetztem Reibwerkzeug;
- **Figur 2**: eine perspektivische Darstellung des Reibwerkzeugs von Figur 1; und
- **Figur 3**: eine Stirnansicht auf das Reibwerkzeug von Figur 2 in Richtung des Pfeils A gesehen.

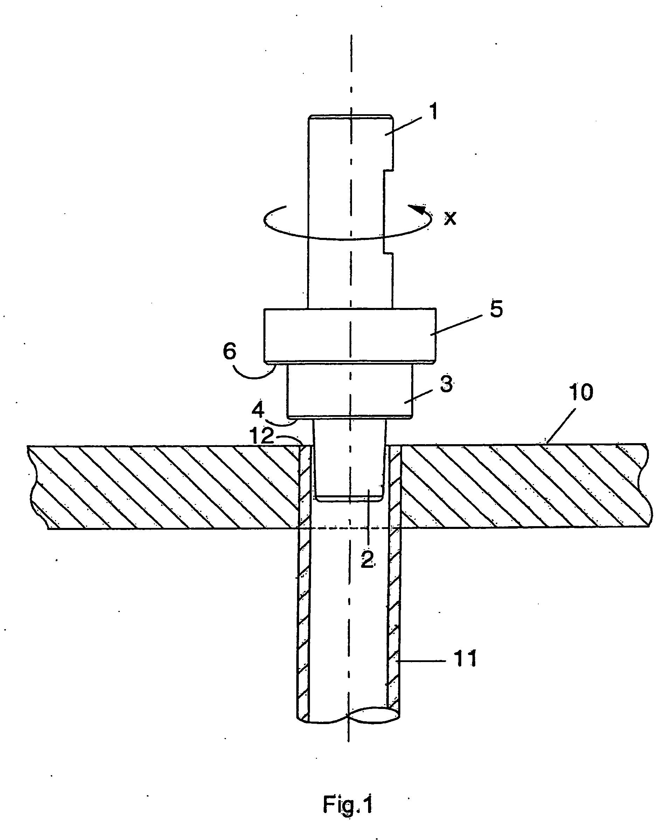

**Figur 1** zeigt einen Ausschnitt aus einem Rohrboden 10, in den ein Rohr 11 mit leichtem Überstand nach oben eingesetzt und gehalten ist. In das freie Ende des Rohrs 11 wird ein Reibwerkzeug eingesetzt, das am oberen Ende einen Schaft 1 zum Einspannen in die Schweißspindel einer nicht dargestellten Reibrührschweißmaschine aufweist. Am gegenüberliegenden unteren Ende ist ein zylindrischer Reibzapfen 2 vorgesehen, der im Betrieb in das freie Ende des Rohrs 11 hinein bewegt wird. Es ist dem Fachmann klar, dass dazu eine Anpassung der Außendurchmesser von Reibzapfen 2 und Innendurchmesser des Rohrs 11 zu erfolgen hat.

Zwischen dem Reibzapfen 2 und dem Schaft 1 sind ein erster Bund 3 und ein zweiter Bund 5 angeordnet, die sich im Außendurchmesser unterscheiden, und zwar in der Weise, dass der Außendurchmesser des ersten Bundes 3 größer als der Außendurchmesser des Reibzapfens 2 ist, und der Außendurchmesser des zweiten Bundes 5 größer ist als der Außendurchmesser des ersten Bundes 3. Auf diese Weise bildet der erste Bund 3 eine erste, axial gerichtete Schulter 4 am Übergang zum Reibzapfen 2 und eine zweite Schulter 6 am Übergang zum zweiten Bund 5. Die zweite Schulter 6 hat allerdings normalerweise keine Funktion beim Schweißen. Sie könnte daher auch konisch oder ballig geformt sein. Mit der parallel zur zweiten Schulter 6, jedoch im Abstand darüber verlaufenden Ringfläche stützt sich das Werkzeug an der nicht dargestellten Schweißspindel ab.

Mit der ersten Schulter 4 kontaktiert das Reibwerkzeug bei Drehung beispielsweise in Richtung des Pfeils X die Stirnfläche 12 des Rohrs 11 und erzeugt dabei durch Reibung eine derart große Hitze, dass das Material des Rohrs 11 im Bereich der Stirnfläche 12 plastifiziert wird. Da die radiale Erstreckung der ersten Schulter 4 größer als der Außendurchmesser des Rohrs 11 ist, kontaktiert die erste Schulter 4 außerdem den zum Rohr 11 benachbart liegenden Bereich des Rohrbodens 10 und plastifiziert diesen ebenfalls durch Wärme, die bei dem Reibvorgang erzeugt wird, so dass sich die beiden plastifizierten Teile 10 und 11 verbinden und eine Schweißnaht bilden.

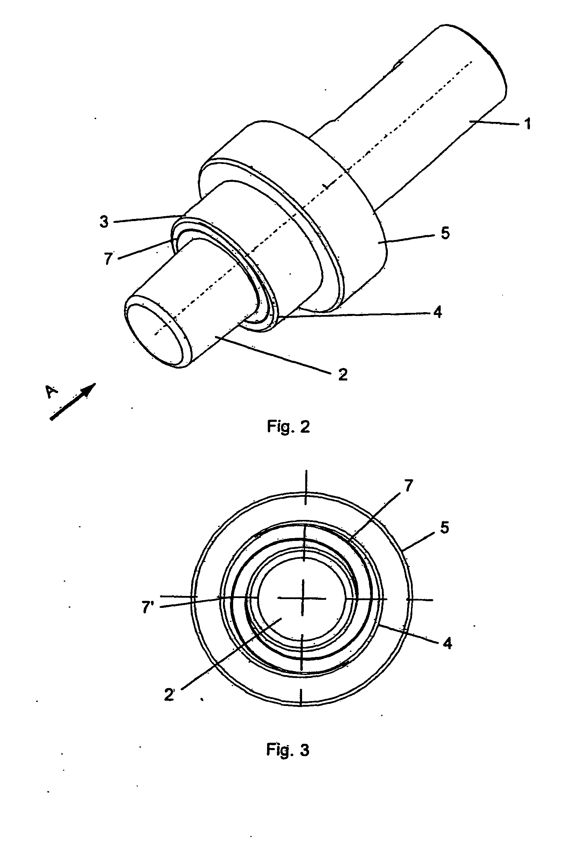

Zur besseren Wärmeerzeugung im Bereich der zu bildenden Schweißnaht und damit zum schnelleren Plastifizieren von Rohrboden 10 und Rohr 11 ist die erste Schulter 4 mit Profilierungen versehen, beispielsweise in Form von ein oder mehrerer spiralförmig verlaufender Nuten, die halbkreisförmigen, dreieckigen oder rechteckigen Querschnitt haben. Bei dem Ausführungsbeispiel nach **Figur 3** sind zwei spiralförmige Nuten erkennbar, die gegeneinander versetzt sind und von innen nach außen verlaufen, also vom Außendurchmesser des zylindrischen Reibzapfens 2 zum Außendurchmesser des ersten Bundes 3.

Der Reibzapfen 2 dient sowohl zur Abstützung als auch zur weiteren Erwärmung des Rohres durch Reibung. Idealerweise kommt der Reibzapfen zuerst mit dem Inneren des Rohres 11 in Kontakt. Daher auch die konische Ausformung des Reibzapfens. Danach erwärmt und plastifiziert die Schulter 4 den Übergang von Rohr 4 und Platte 11. Das sowohl an der Schulter 4 als auch am Reibzapfen 2 während der Versuche abgelagerte Aluminium zeigt, das der Reibzapfen 2 auch am Reibvorgang beteiligt ist.

## Patentansprüche

1. Verfahren zum Verbinden von Rohrboden (10) und Rohren (11) in einem Rohrbündel-Wärmeübertrager mit Hilfe eines rotierenden Reibwerkzeugs, **dadurch gekennzeichnet, daß** das Reibwerkzeug in das offene Ende eines vom Rohrboden (10) umgebenen Rohres (11) rotierend in dessen achsialer Richtung hinein bewegt und gegen die Stirnfläche (12) des Rohres (11) in der Weise gedrückt wird, daß das Rohrende und der das Rohrende umgebende Bereich des Rohrbodens (10) plastifiziert werden und miteinander eine Schweißverbindung eingehen.

2. Verfahren nach Anspruch 1, **dadurch gekennzeichnet, dass** ein Reibwerkzeug **gekennzeichnet durch** einen Schaft (1), der an seinem freien, nicht zum Einspannen vorgesehenen Ende einen zylindrischen Reibzapfen (2) aufweist, der sich beim Reibschweißen nicht verbraucht, und **durch** einen an den Reibzapfen (2) anschließenden Bund (3) mit größerem Außendurchmesser als der Reibzapfen (2) und mit einer Schulter (4), die den Übergang vom Bund (3) zum Reibzapfen (2) bildet, verwendet wird.

3. Verfahren nach Anspruch 2, **dadurch gekennzeichnet, daß** die Schulter (4) des Bunds (3) des verwendeten Reibwerkzeuges mit mindestens einer Profilierung (7) versehen ist.

4. Verfahren nach Anspruch 3, **dadurch gekennzeichnet, daß** die Profilierung (7) in der Schulter (4) des verwendeten Reibwerkzeuges vom Reibzapfen (2) aus gesehen konkav ist.

5. Verfahren nach Anspruch 4, **dadurch gekennzeichnet, daß** die Profilierung (7) in der Schulter (4) des verwendeten Reibwerkzeuges im Querschnitt halbrund, rechteckig oder dreieckig ist.

6. Verfahren zum Herstellen eines Rohrbündel-Wärmeübertragers, **dadurch gekennzeichnet, dass** Rohrboden (10) und Rohre (11) durch ein Verfahren gemäß Anspruch 1 verbunden werden.

## Claims

1. Method for the joining of a tube plate (10) and tubes (11) in a tube-bundle heat exchanger with the aid of a rotating friction tool, **characterized in that** the friction tool is moved rotatingly into the open end of a tube (11) surrounded by the tube plate (10) in the axial direction of the said tube and is pressed against the end face (12) of the tube (11) in such a way that the tube end and that region of the tube plate (10) surrounding the tube end are plasticized and make a welded joint with one another.

2. Method according to Claim 1, **characterized in that** a friction tool, **characterized by** a shank (1), which at its free end not provided for the clamping has a cylindrical friction pin (2) which is not consumed during friction welding, and by a collar (3) adjoining the friction pin (2) and having a larger outside diameter than the friction pin (2) and having a shoulder (4) which forms the transition from the collar (3) to the friction pin (2), is used.

3. Method according to Claim 2, **characterized in that** the shoulder (4) of the collar (3) of the friction tool used is provided with at least one profiling (7).

4. Method according to Claim 3, **characterized in that** the profiling (7) in the shoulder (4) of the friction tool used is concave, as seen from the friction pin (2) .

5. Method according to Claim 4, **characterized in that** the profiling (7) in the shoulder (4) of the friction tool used is semicircular, rectangular or triangular in cross section.

6. Method for producing a tube-bundle heat exchanger, **characterized in that** the tube plate (10) and the tubes (11) are connected by means of a method according to Claim 1.

## Revendications

1. Procédé de raccordement de plaques à tubes (10) et de tubes (11) dans un échangeur de chaleur à faisceau de tubes, à l'aide d'un outil d'alésage rotatif, **caractérisé en ce que** l'outil de friction se déplace à l'intérieur de l'extrémité ouverte d'un tube (11), entouré par la plaque à tubes (10), en rotation dans sa direction axiale et est pressé contre la face frontale (12) du tube (11) de telle sorte que l'extrémité du tube et la région de la plaque à tubes (10) entourant l'extrémité du tube soient plastifiées et soient reliées l'une à l'autre par soudage.

2. Procédé selon la revendication 1, **caractérisé en ce que** l'on utilise un outil de friction **caractérisé par** un arbre (1) qui présente à son extrémité libre non prévue pour le serrage un tourillon de friction cylindrique (2) qui ne s'use pas lors du soudage par friction, et par un collet (3) se raccordant au tourillon de friction (2), ayant un diamètre extérieur supérieur à celui du tourillon de friction (2) et ayant un épaulement (4) qui forme la transition du collet (3) au tourillon de friction (2).

3. Procédé selon la revendication 2, **caractérisé en ce que** l'épaulement (4) du collet (3) de l'outil de friction utilisé est pourvu d'au moins un profilage (7).

4. Procédé selon la revendication 3, **caractérisé en ce que** le profilage (7) dans l'épaulement (4) de l'outil de friction utilisé est concave, vu depuis le tourillon de friction (2).

5. Procédé selon la revendication 4, **caractérisé en ce que** le profilage (7) dans l'épaulement (4) de l'outil de friction utilisé a une section transversale semi-circulaire, rectangulaire ou triangulaire.

6. Procédé de fabrication d'un échangeur de chaleur à faisceau de tubes, **caractérisé en ce que** la plaque à tubes (10) et les tubes (11) sont reliés par un procédé selon la revendication 1.
